# EUROPEAN PATENT SPECIFICATION

(11) **EP 4 461 646 B1**
(45) Date of publication and mention of the grant of the patent: **16.09.2026**
(21) Application number: 23172583.9
(22) Date of filing: 10.05.2023
(51) Int. Cl.: B64D 11/00, B64D 11/04

(54) **REMOVABLE T-DIVIDER**
ENTFERNBARER T-TEILER
DIVISEUR EN T AMOVIBLE

(43) Date of publication of application: 13.11.2024
(73) Proprietor: Airbus Operations GmbH, 21129 Hamburg (DE)
(72) Inventor: HOLTORF, Boris, 21129 Hamburg (DE)
(74) Representative: LKGLOBAL Partnerschaftsgesellschaft mbB

(56) References cited:
- EP-A1- 3 792 180
- EP-A1- 4 406 837
- EP-B1- 3 778 396
- US-A1- 2018 208 314
- US-B1- 10 974 901

## Description

### FIELD OF THE INVENTION

The present invention relates to a multi-slot compartment for accommodating a plurality of movable containers like trolleys in an aircraft. In particular, the invention relates to mechanical means for preventing unintended side-movements of a trolley when being in such a multi-slot compartment.

### BACKGROUND OF THE INVENTION

For example, in single aisle aircraft, it can happen that the outboard wall of a trolley compartment is located further outboard than the slide raft container or the door hinge of the closed entrance door. In consequence, the trolleys in such compartments cannot just be pulled straight out of their compartment but must be pulled out in an angle in order to get past the obstacles in the way.

Often, trolley slots are divided by means of T-dividers under a top plate or a workdeck so as to prevent tilting or turning of a trolley remaining inside a multi-slot compartment while the adjacent one of the trolleys is being outside of the compartment in use.

The T-divider keeps the remaining trolley(s) in that compartment in a straight position to facilitate insertion of a trolley after use or in an emergency case, e.g. in-flight turbulence.

EP 3 792 180 suggests the use of so-called "pivoting T-dividers" which are vertically hinged at a far end of the T-divider and can be shifted horizontally or sidewards at the front end so as to be at an angle under the workdeck. In other words, after temporary removal of an adjacent trolley, the front end of the "pivoting T-dividers" can be shifted sidewards to allow an angle in the trolley trajectory and, thus, the trolley can be moved along an inclined track past an obstacle. After trolley movement, the "pivoting T-dividers" must be shifted back by the user to the straight original position.

The use of a "pivoting T-divider" can be described by the following steps. (1) A locking mechanism at the T-divider has to be unlocked. (2) The user has to grab the pivoting T-divider under the workdeck and has to shift it from the straight into a sidewardly angled position. (3) The trolley can now be inserted into (or retrieved from) the compartment in an angled trajectory. (4) The user must again grab the pivoting T-divider under the workdeck and must push it back from the angled into the straight position. (5) The locking mechanism is to be locked again.

US 2018/0208314 A1 describes a cabin segment for a vehicle including a first lateral segment module having a first main extension axis, a second lateral segment module having a second main extension axis, and an aisle arranged in the cabin segment. The main extension axes parallel to each other, and the first and second lateral segment modules are distanced from each other in a direction perpendicular to the main extension axes and enclose the aisle, which runs parallel to the main extension axes. The first lateral segment module includes at least one receiving space to receive serving trolleys. The at least one receiving space has a receiving opening facing into the aisle.

US 10,974,901 B1 describes a container extraction assembly that includes an extractor assembly and a retainer assembly. The extractor assembly includes a pull member and an extractor member. The extractor member is movable between a distal position and a proximal position and the pull member is movable between first, second and third positions. Moving the pull member from the first position to the third position moves the extractor member from the distal to the proximal position. The retainer assembly includes a proximal leg member and a distal leg member that are hingedly connected to one another. The retainer assembly is movable between a deployed position, a folded position and a finish position. Moving the pull member from the first position to the second position moves the retainer assembly from the deployed to the folded position, and moving the pull member from the second position to the third position moves the retainer assembly from the folded to the finish position.

EP 4 406 837 A1 describes a T-divider including a housing defining a proximal end, a distal end, and at least one cavity extending therebetween. The housing extends along a longitudinal axis. The T-divider includes a moveable portion disposed in the housing and extending between the proximal end and the distal end. The movable portion is configured to rotate about the longitudinal axis from a stowed orientation to a removal orientation.

As the T-dividers extend under the workdeck they can be easily overlooked. Therefore, they can be easily hit by a trolley which can lead to damages to the T-divider. Moreover, there can be damages to the pivoting mechanism including hinges and guiding tracks due to wear, tear, vibration, misuse, abuse, and other reasons.

### SUMMARY OF THE INVENTION

It may be seen as an object to provide a mechanism which is easier to use and which improves the movability of trolleys if needed. A solution is provided by the subject-matter of independent claim 1.

Further embodiments are defined by the respective dependent claims.

In general and in accordance with the invention, a T-divider for separating, e.g., containers or trolleys in a multi-slot compartment, comprises one or more separating element which can be moved from a first condition in which the separating element blocks sideward movement of a container, like a known T-divider, to a second condition in which the separating element does not block any movement of the container.

In the context of this disclosure, those separating elements are denoted as "removable T-divider".

A removable T-divider comprises at least one separating element and an operating element. The at least one separating element is coupled to the operating element and is adapted to move from a first condition to a second condition, wherein the at least one separating element is adapted to prevent movements of at least one of the containers, when the at least one separating element is in the first condition, and wherein the at least one separating element is adapted to allow movement of at least one of the containers, when the at least one separating element is in the second condition.

In the second condition, the T-divider is said to be "removed", meaning that any trolley can move transverse to the T-divider without contacting the same.

The removable T-divider may comprise a plurality of separating elements, wherein each of the plurality of separating elements is coupled to an operating element and is adapted to move simultaneously from the first condition to the second condition. That is, one operating element may move all separating elements.

In accordance with the invention, the at least one separating element is coupled to the operating element such that the operating element is translationally moving while the at least one separating element is rotationally moving. The operating element may, for example, be a rod provided with a first engagement element and the separating element may be pivotable about a horizontal rotation axis and may be provided with a second engagement element. It will be understood that the translational movement of the operating element may be transmitted by means of the engagement elements so as to cause the rotational movement of the separating element, or vice versa.

As an example, the first engagement element may be a protrusion and the second engagement element may be a recess, wherein the protrusion is configured to be received in the recess. Such a combination may be realized as gear drive.

According to another example, the first engagement element may be a lever and the second engagement element may be an engagement axis, wherein the engagement axis may be provided at the separating element at a distance to the rotation axis of the separating element and wherein the lever engages the engagement axis. This example may be denoted as crank mechanism.

Alternatively or additionally, the operating element may be coupled to the separating element at an engagement axis and a fixed abutment element may be provided adapted to cause a rotational movement of the separating element about the engagement axis. In other words, a translational movement of the operating element moves the separating element until a further translational movement of the separating element is blocked by the abutment element, which in turn causes a swiveling movement of the separating element.

A multi-slot compartment for accommodating a plurality of containers is provided, wherein the multi-slot compartment comprises a plate defining an upper limit of the multi-slot compartment, and a removable T-divider arranged at a lower surface of the plate so that the T-divider separates spaces for respective containers. The removable T-divider comprising at least one separating element and an operating element, wherein the at least one separating element is coupled to the operating element and is adapted to move from a first condition to a second condition, as described by the examples above.

The removable T-divider may be arranged at the plate such that an end portion of the operating element is located at an edge portion of the plate. Such an arrangement allows for an easy access and operation of the removable T-divider. The multi-slot compartment may comprise a plurality of removable T-dividers.

According to an embodiment, the multi-slot compartment may further comprise an extension element provided at the lower surface of the plate in extension of a longitudinal direction of the operating element, wherein the extension element is configured to separate spaces for respective containers. That extension element may be fixedly arranged.

Multi-slot compartments and removable T-dividers as described above can be used, in particular, in an aircraft.

### BRIEF DESCRIPTION OF DRAWINGS

Exemplary embodiments of the invention will be described in the following with reference to the following drawings:
Fig. 1 schematically shows three stages of movement of a removable T-divider in a side view.
Fig. 2 is a schematical front view of a removable T-divider together with trolleys.
Fig. 3 is a schematical top view of the removable T-divider shown in figure 2.
Fig. 4 illustrates examples of engagement between operating element and separating element.

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

### DETAILED DESCRIPTION OF EMBODIMENTS

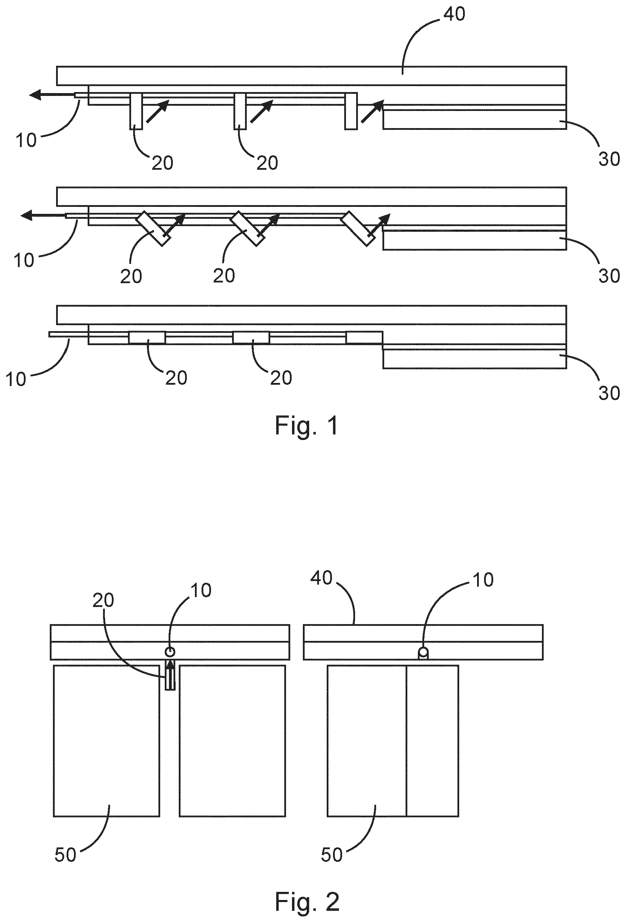

Figure 1 shows an exemplary removable T-divider with an operating element 10, three separating elements 20 and an extension element 30, all arranged under a plate 40. Further, figure 1 illustrates three stages of movement of the removable T-divider. From top to bottom, the separating elements 20 of the T-divider are shown (i) in a first condition in which movements of trolleys can be blocked, (ii) in an intermediate condition, and (iii) in a second condition in which the T-divider can be denoted as "removed", i.e. in which a trolley may move beneath the separating elements 20. The direction of movement of the operating element as well as of the separating elements is indicated in figure 1 by arrows.

Instead of a T-extrusion with a vertical hinge point at the back and an angular guidance at the front, i.e. instead of a known "pivotable T-divider", the proposed mechanism has a straight actuation by means of a rod-like operating element 10. Said element may be connected with one or more rotatable separating elements 20 which provide local support for the trolley to prevent tilting or to transfer loads in lateral direction. A short piece of a fixed extension element 30 may be arranged at a portion (on the right in figure 1) where it does likely not impede trolley handling. When pulling the operating element 10 or when hit by a trolley from the front (from the left in figure 1), the operating element 10 will extend forward and the separating elements 20 will rotate backwards and upwards towards the workdeck. Then, the trolleys may be allowed to freely move inside the trolley compartment.

At the left side of figure 2, a front view is shown with two trolleys 50 beneath a plate 40, and with a removable T-divider with an operating element 10 and at least one separating element 20 between the trolleys. At the right side, one trolley 50 is located beneath the plate 40, wherein the trolley is oriented with an angle to the direction of the compartment. Here, the trolley may be freely moved under the plate 40, with the separating elements of the removable T-divider being in the second condition, i.e. not blocking such movements.

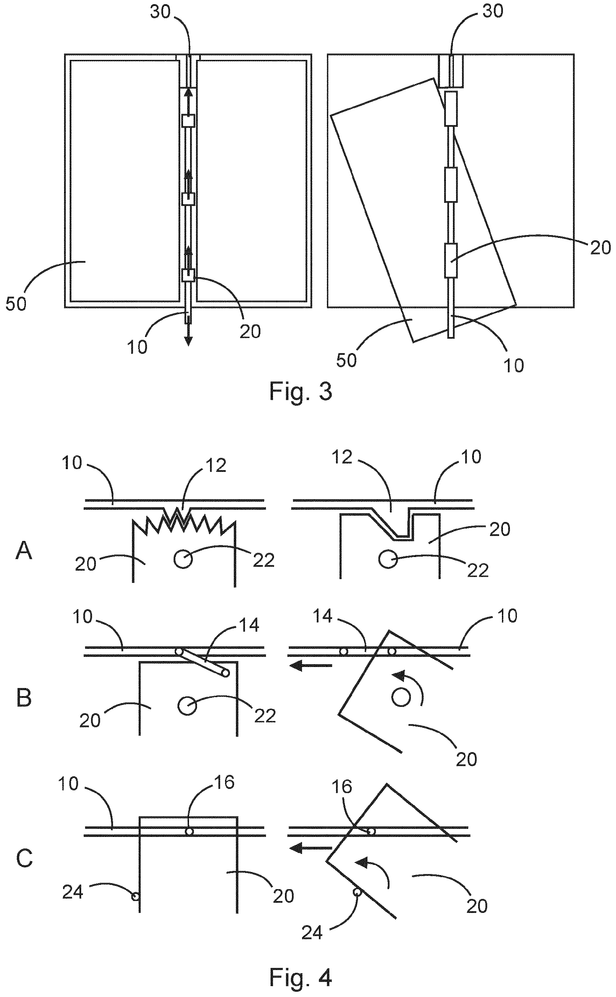

In figure 3, the situation as in figure 2 is shown by a top view. At the left side, the two trolleys 50 are shown inside their slots in the compartment, with the separating element(s) 20 lowered, i.e., in their first condition, so as to separate the two trolleys from each other. At the right side, the separating element(s) 20 are folded back and one trolley is removed. The remaining trolley 50 may, thus, be moved freely in the compartment, even crossing the line of the removable T-divider.

The function can further be described as follows. First, the mechanism may be considered in a condition which can be denoted as secured or safe status. The rod-like operating element is retracted and the rotatable separating element is lowered, providing local lateral support to the trolleys, i.e., the position of the trolleys are secured. In that situation, a handle at the front end of the operating element may be pulled by, e.g., the cabin crew so that the rod is moving forward and the rotatable element is retracting by rotating upwards and aft. In this status the rod may fully extend outward from the front of the workdeck. It may reach an end stop and may not be pulled any further. This position may be indicated as "unsafe" in a sense that a trolley beneath the workdeck is not secured with respect to lateral movements. The rotatable separating element may be fully removed so that it cannot be hit by a trolley anymore. The trolleys can freely move in their compartment now.

It is noted that a trolley may hit a rotatable separating element from the front during catering procedure. For example, it may have been forgotten to remove the separating elements out of the way. Being hit, the separating element rotates backwards out of the way of the trolley. As it is coupled with the rod, the rod moves forward.

In short, the following aspects and advantages can be mentioned with respect to the removable T-divider.
1.) The operating rod may have a front end which is easy to access so as to be pulled for removing the separating elements.
2.) The pulled rod may extend outwardly and an "unsafe" status may be indicated. The rod may have some kind of locking means.
3.) There is no need to grab under the workdeck.
4.) The trolley can be inserted into (or retrieved from) the compartment in any angled trajectory as there is nothing protruding from underneath the workdeck.
5.) By pushing the operating rod back so as to lower the rotatable separating elements, a "safe" status can be restored. The rotatable elements will provide lateral support to the trolleys.

With respect to figure 4, examples are illustrated which allow a conversion of the translational movement of the operating element 10 to the rotational swivel movement of the separating element 20.

As example "A", a tooth type gear is shown. The operating element 10 has at least one tooth 12 engaging into corresponding teeth or at least one recess at the end of the rotatable separating element. Operating forces at the operating element 10 cause the separating element 20 to rotate about the axis 22. Gravity extension at the separating element 20 may provide a tendency of the separating element towards the lowered first condition. Alternatively or additionally, spring elements may be provided which push or pull the separating elements and/or the operating element towards the first condition in which lateral movements of trolleys are prevented.

As example "B", a hinge/lever type gear is shown. A lever 14 is attached to operating rod 10 and to the separating element 20 by means of rotation axes. Upon movement of the rod 10, the lever 14 will force the separating element 20 to follow. It may be understood that in case the lever axis at the separating element is arranged so as to be always behind (i.e., on the right side in figure 4) the rotation axis 22 of the separating element 20, gravity may cause the separating element to swivel back to the lowered first condition.

As example "C", a resistance type gear is shown. There is any kind of physical resistance or abutment point 24 in the pull direction of the operating rod 10 next to the separating element 20 which is attached to the rod 10 by means of an axis 16. When pulling the operating rod 10, the point 24 will force the separating element 20 to a rotation. The further a sideward distance between rod 10 and abutment point 24, the less force is needed for operation.

While the invention has been illustrated and described in detail in the drawings and foregoing description, such illustration and description are to be considered illustrative or exemplary and not restrictive. The invention is not limited to the disclosed embodiments but only by the wording of the appended claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A multi-slot compartment for accommodating a plurality of containers (50), wherein the multi-slot compartment comprises a plate (40) defining an upper limit of the multi-slot compartment, and a removable T-divider, wherein the removable T-divider is arranged at a lower surface of the plate so that the T-divider separates side by side spaces for respective containers (50), the T-divider comprising at least one separating element (20) and an operating element (10),
wherein the at least one separating element is coupled to the operating element which is adapted to move the separating element from a first condition to a second condition,
wherein the at least one separating element (20) is adapted to prevent transverse movements of at least one of the containers (50), when the at least one separating element is in the first condition, and wherein the at least one separating element is removed in the second condition allowing, in use, transverse movement of at least one of the containers, and
wherein the at least one separating element (20) is coupled to the operating element (10) such that a translational movement of the operating element causes a rotational movement of the at least one separating element.

2. The multi-slot compartment of claim 1, wherein the T-divider comprises a plurality of separating elements (20), wherein each of the plurality of separating elements is coupled to the operating element (10) and is adapted to move simultaneously from the first condition to the second condition.

3. The multi-slot compartment of claim 1, wherein the operating element (10) is a rod providing with a first engagement element (12) and wherein the separating element is pivotable about a rotation axis (22) and is provided with a second engagement element.

4. The multi-slot compartment of claim 3, wherein the first engagement element is a protrusion (12) and the second engagement element is a recess, wherein the protrusion is configured to be received in the recess.

5. The multi-slot compartment of claim 3, wherein the first engagement element is a lever (14) and the second engagement element is an engagement axis, wherein the engagement axis is provided at the separating element (20) at a distance to the rotation axis (22) of the separating element and wherein the lever engages the engagement axis.

6. The multi-slot compartment of claim 1, wherein the operating element (10) is coupled to the separating element (20) at an engagement axis (16) and wherein a fixed abutment element (24) is provided adapted to cause a rotational movement of the separating element about the engagement axis.

7. The multi-slot compartment of claim 1, wherein the removable T-divider is arranged at the plate (40) such that an end portion of the operating element (10) is located at an edge portion of the plate.

8. The multi-slot compartment of any one of claims 1 to 7, wherein the multi-slot compartment comprises a plurality of removable T-dividers.

9. The multi-slot compartment of any one of claims 1 to 8, further comprising an extension element (30) provided at the lower surface of the plate in extension of a longitudinal direction of the operating element, wherein the extension element is configured to separate spaces for respective containers (50).

10. An aircraft comprising a multi-slot compartment for accommodating a plurality of containers (50), the multi-slot compartment being in accordance with any one of claims 1 to 9.

## Patentansprüche

1. Ein Mehrfach-Einschubschacht zum Aufnehmen einer Mehrzahl von Containern (50), wobei der Mehrfach-Einschubschacht eine Platte (40), die eine obere Begrenzung des Mehrfach-Einschubschachts definiert, und einen entfernbaren T-Teiler aufweist, wobei der entfernbare T-Teiler an einer unteren Fläche der Platte angeordnet ist, sodass der T-Teiler Seite an Seite Schächte für jeweilige Container (50) trennt, wobei der T-Teiler mindestens ein Trennelement (20) und ein Betätigungselement (10) aufweist,
wobei das mindestens eine Trennelement mit dem Betätigungselement gekoppelt ist, das angepasst ist, um das Trennelement von einem ersten Zustand in einen zweiten Zustand zu bewegen,
wobei das mindestens eine Trennelement (20) angepasst ist, um Querbewegungen von mindestens einem der Container (50) zu verhindern, wenn das mindestens eine Trennelement in dem ersten Zustand ist, und wobei das mindestens eine Trennelement in dem zweiten Zustand entfernt ist, was im Gebrauch eine Querbewegung von mindestens einem der Container erlaubt, und
wobei das mindestens eine Trennelement (20) mit dem Betätigungselement (10) gekoppelt ist, sodass eine Translationsbewegung des Betätigungselements eine Drehbewegung des mindestens einen Trennelements verursacht.

2. Der Mehrfach-Einschubschacht gemäß Anspruch 1, wobei der T-Teiler eine Mehrzahl von Trennelementen (20) aufweist, wobei jedes der Mehrzahl von Trennelementen mit dem Betätigungselement (10) gekoppelt ist und angepasst ist, um sich gleichzeitig von dem ersten Zustand in den zweiten Zustand zu bewegen.

3. Der Mehrfach-Einschubschacht gemäß Anspruch 1, wobei das Betätigungselement (10) eine Stange ist, die mit einem ersten Eingriffselement (12) vorgesehen ist, und wobei das Trennelement um eine Drehachse (22) schwenkbar ist und mit einem zweiten Eingriffselement vorgesehen ist.

4. Der Mehrfach-Einschubschacht gemäß Anspruch 3, wobei das erste Eingriffselement ein Vorsprung (12) ist und das zweite Eingriffselement eine Aussparung ist, wobei der Vorsprung konfiguriert ist, um in der Aussparung aufgenommen zu werden.

5. Der Mehrfach-Einschubschacht gemäß Anspruch 3, wobei das erste Eingriffselement ein Hebel (14) ist und das zweite Eingriffselement eine Eingriffsachse ist, wobei die Eingriffsachse an dem Trennelement (20) in einem Abstand zu der Drehachse (22) des Trennelements vorgesehen ist und wobei der Hebel mit der Eingriffsachse in Eingriff steht.

6. Der Mehrfach-Einschubschacht gemäß Anspruch 1, wobei das Betätigungselement (10) mit dem Trennelement (20) an einer Eingriffsachse (16) gekoppelt ist und wobei ein festes Anschlagelement (24) vorgesehen ist, das angepasst ist, um eine Drehbewegung des Trennelements um die Eingriffsachse zu verursachen.

7. Der Mehrfach-Einschubschacht gemäß Anspruch 1, wobei der entfernbare T-Teiler an der Platte (40) angeordnet ist, sodass ein Endabschnitt des Betätigungselements (10) an einem Randabschnitt der Platte angeordnet ist.

8. Der Mehrfach-Einschubschacht gemäß einem der Ansprüche 1 bis 7, wobei der Mehrfach-Einschubschacht eine Mehrzahl von entfernbaren T-Teilern aufweist.

9. Der Mehrfach-Einschubschacht gemäß einem der Ansprüche 1 bis 8, ferner aufweisend ein Verlängerungselement (30), das an der unteren Fläche der Platte in Verlängerung einer Längsrichtung des Betätigungselements vorgesehen ist, wobei das Verlängerungselement konfiguriert ist, um Schächte für jeweilige Container (50) zu trennen.

10. Ein Flugzeug, aufweisend einen Mehrfach-Einschubschacht zum Aufnehmen einer Mehrzahl von Containern (50), wobei der Mehrfach-Einschubschacht gemäß einem der Ansprüche 1 bis 9 ist.

## Revendications

1. En compartiment à fentes multiples pour loger une pluralité de conteneurs (50), dans lequel le compartiment à fentes multiples comprend une plaque (40) définissant une limite supérieure du compartiment à fentes multiples, et un T-diviseur amovible, dans lequel le T-diviseur amovible est agencé au niveau d'une surface inférieure de la plaque de sorte que le T-diviseur sépare côte à côte des espaces pour des conteneurs respectifs (50), le T-diviseur comprenant au moins un élément de séparation (20) et un élément d'actionnement (10),
dans lequel l'au moins un élément de séparation est couplé à l'élément d'actionnement qui est adapté pour déplacer l'élément de séparation d'un premier état à un second état,
dans lequel l'au moins un élément de séparation (20) est adapté pour empêcher des mouvements transversaux d'au moins un des conteneurs (50), lorsque l'au moins un élément de séparation est dans le premier état, et dans lequel l'au moins un élément de séparation est retiré dans le second état permettant, en utilisation, un mouvement transversal d'au moins un des conteneurs, et
dans lequel l'au moins un élément de séparation (20) est couplé à l'élément d'actionnement (10) de sorte qu'un mouvement de translation de l'élément d'actionnement provoque un mouvement de rotation de l'au moins un élément de séparation.

2. Le Compartiment à fentes multiples selon la revendication 1, dans lequel le T-diviseur comprend une pluralité d'éléments de séparation (20), dans lequel chacun de la pluralité d'éléments de séparation est couplé à l'élément d'actionnement (10) et est adapté pour se déplacer simultanément du premier état au second état.

3. Le Compartiment à fentes multiples selon la revendication 1, dans lequel l'élément d'actionnement (10) est une tige pourvue d'un premier élément de mise en prise (12) et dans lequel l'élément de séparation peut pivoter autour d'un axe de rotation (22) et est pourvu d'un second élément de mise en prise.

4. Le Compartiment à fentes multiples selon la revendication 3, dans lequel le premier élément de mise en prise est une saillie (12) et le second élément de mise en prise est un évidement, dans lequel la saillie est configurée pour être reçue dans l'évidement.

5. Le Compartiment à fentes multiples selon la revendication 3, dans lequel le premier élément de mise en prise est un levier (14) et le second élément de mise en prise est un axe de mise en prise, dans lequel l'axe de mise en prise est prévu au niveau de l'élément de séparation (20) à une distance de l'axe de rotation (22) de l'élément de séparation et dans lequel le levier met en prise l'axe de mise en prise.

6. Le Compartiment à fentes multiples selon la revendication 1, dans lequel l'élément d'actionnement (10) est couplé à l'élément de séparation (20) au niveau d'un axe de mise en prise (16) et dans lequel un élément de butée fixe (24) est prévu adapté pour provoquer un mouvement de rotation de l'élément de séparation autour de l'axe de mise en prise.

7. Le Compartiment à fentes multiples selon la revendication 1, dans lequel le T-diviseur amovible est agencé au niveau de la plaque (40) de sorte qu'une partie d'extrémité de l'élément d'actionnement (10) est située au niveau d'une partie de bord de la plaque.

8. Le Compartiment à fentes multiples selon l'une quelconque des revendications 1 à 7, dans lequel le compartiment à fentes multiples comprend une pluralité de T-diviseurs amovibles.

9. Le Compartiment à fentes multiples selon l'une quelconque des revendications 1 à 8, comprenant en outre un élément d'extension (30) prévu au niveau de la surface inférieure de la plaque dans l'extension d'une direction longitudinale de l'élément d'actionnement, dans lequel l'élément d'extension est configuré pour séparer des espaces pour des conteneurs respectifs (50).

10. Un aéronef comprenant un compartiment à fentes multiples pour loger une pluralité de conteneurs (50), le compartiment à fentes multiples étant selon l'une quelconque des revendications 1 à 9.
